(19) Europäisches Patentamt / European Patent Office / Office européen des brevets

(11) **EP 4 394 462 A1**

(12) **EUROPEAN PATENT APPLICATION**

(43) Date of publication:
**03.07.2024 Bulletin 2024/27**

(51) International Patent Classification (IPC):
**G02B 6/02** *(2006.01)*     **G02B 6/036** *(2006.01)*
**G02B 6/028** *(2006.01)*

(21) Application number: **23181421.1**

(22) Date of filing: **26.06.2023**

(52) Cooperative Patent Classification (CPC):
**G02B 6/02009; G02B 6/03627; G02B 6/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 IN 202211077232**

(71) Applicant: **Sterlite Technologies Limited**
**Gurugram, Haryana 122102 (IN)**

(72) Inventors:
• **Malviya, Apeksha**
  **122102 Gurugram, Haryana (IN)**
• **Digarse, Harshika**
  **122102 Gurugram, Haryana (IN)**
• **Kumar, Shubham**
  **122102 Gurugram, Haryana (IN)**
• **Balakrishnan, Ranjith**
  **122102 Gurugram, Haryana (IN)**
• **Munige, Srinivas Reddy**
  **122102 Gurugram, Haryana (IN)**
• **Pandey, Anand K**
  **122102 Gurugram, Haryana (IN)**

(74) Representative: **Petraz, Gilberto Luigi et al**
**GLP S.r.l.**
**Viale Europa Unita, 171**
**33100 Udine (IT)**

(54) **OPTICAL FIBER WITH A FLUORINE CLADDING ADJACENT TO THE CORE**

(57)     The present disclosure relates to an optical fiber (100) comprising a core (102) up-doped with an up-dopant such as Germanium (Ge), a cladding (104) that has inner and outer claddings (108, 110). In particular, the inner cladding (108) is down doped with a down dopant and is disposed adjacent to the core (102) and the outer cladding (110) is at least one of, undoped and down doped. Moreover, the optical fiber (100) has (i) a Mode Field Diameter (MFD) in a range of 9.5 $\mu$m to 13.0 $\mu$m and (ii) a Cable Cut off of less than 1530 nm.

**FIG. 1**

EP 4 394 462 A1

## Description

## TECHNICAL FIELD

Embodiments of the present disclosure relate to the field of optical fiber communications, and more particularly to an optical fiber with an immediate fluorine cladding positioned adjacent to the core.

This application claims the benefit of Indian Application No.202211077232 titled "OPTICAL FIBER WITH AN IMMEDIATE FLUORINE CLADDING" filed by the applicant on December 30, 2022, which is incorporated herein by reference in its entirety.

## BACKGROUND ART

Optical fiber as optical communication network underlying transport physical media, can direct body to the improvement of its Transmission system performance Now in the improvement of OSNR (OSNR). The loss of optical fiber and nonlinear effect are limitation high-speed high capacity fiber optic communication systems. The key factor of system OSNR. Proved by correlative study, increase the effective area (A of optical fibereff), can not only be added to fine light Power, can also effectively reduce nonlinear effect. So increasing optical fiber effective area, it is to overcome fiber loss to reduce fiber loss with the main path of the two restraining factors of nonlinear effect.

Telecommunication systems for underground and undersea applications, require optical fibers that can transmit signals to longer distances without any degradation. However, the optical fiber attributes such as attenuation and bend loss can contribute to some degradation of the signals transmitted through the optical fiber.

Single mode fibers of G.652.D/G657A2 generally face major challenges in 400G transmission in territorial long haul communication systems due to non-linear effects, mainly in submarine application. Single mode fibers of G654E/G654C is specifically characterized by cutoff shifted, low attenuation, low latency, higher Optical Signal to Noise Ratio (OSNR) as compared to G.652.D/G657A2. Also, single mode fibers of G654E have large effective area and large Mode Field Diameter (MFD) as compared to G.652.D/G657A2.

The main component of telecommunication optical fiber is silica.In preform manufacturing process, typically by mixing dioxy Changing germanium and improve the refractive index of sandwich layer, and mix fluorine element reduces cladding index.By the effort of 40 years, prefabricated rods and light Fine manufacturing process has reached ultimate attainment.In addition to the Intrinsic Gettering of silica, the absorption and scattering of the germanium dioxide that adulterates It is the main source of telecommunication optical fiber decay, therefore the content for reducing sandwich layer germanium dioxide is the Main way for reducing optical fiber attenuation. Existing typical case is G.654 in Single Mode Fiber Design, although the refractive index of its sandwich layer and the content of germanium dioxide are substantially less than typical case G.652 optical fiber, but its mode field diameter, cutoff wavelength λccThe further of sandwich layer germanium dioxide doping is limited with bending loss Decline.

Prior art reference CN106772788A discloses a kind of cut off wavelength displacement single-mode fiber having a sandwich layer, an inner cladding for coating successively, a depressed cladding, a middle covering and a surrounding layer. The single mode fiber provides properties such as low decay, large effective area and low bend loss, and can realize the controllability of fiber cut off wavelength.

Another prior art referenceUS20170003445A1 discloses an optical fiber with large effective area, low bending loss and low attenuation. The optical fiber includes a core, an inner cladding region, and an outer cladding region. The core region includes a spatially uniform up-dopant to minimize low Rayleigh scattering and a relative refractive index and radius configured to provide a large effective area. The inner cladding region features a large trench volume to minimize bending loss.

Yet another prior art reference US20130071080A1 discloses a trench-assisted optical fiber, optimized for figure-of-merit (FOM) performance, having a core region having a longitudinal axis, a shelf region surrounding said core region, a cladding region surrounding said shelf region, said core and shelf and cladding regions configured to support and guide the propagation of signal light in a fundamental transverse mode in said core and shelf regions in the direction of said axis, the cladding region including an inner trench and an outer trench.

Therefore, in the light of the above-stated discussion, there is a need to provide a technical solution that overcomes the aforementioned problems of the traditional single mode optical fibers by providing an optical fiber with higher cut-off wavelength, large effective area, large Mode Field Diameter (MFD), low attenuation, low latency, and higher Optical Signal to Noise Ratio (OSNR).

## SUMMARY OF THE DISCLOSURE

Embodiments of the present disclosure provide

According to the first aspect of the present disclosure, an optical fiber comprising a core that is up doped with an up dopant; the up dopant is Germanium (Ge) and a cladding having inner and outer claddings. The inner cladding is down doped with a down dopant and disposed adjacent to the core. The outer cladding is either undoped or down doped.

In accordance with an embodiment of the present disclosure, the optical fiber has (i) a Mode Field Diameter (MFD) in a range of 9.5 $\mu$m to 13.0 $\mu$m and (ii) a Cable Cut off of less than 1530 nm.

According to the second aspect of the present disclosure, the core has a core radius R1 in a range of 4.5 micrometres ($\mu$m) to 6.5 $\mu$m, the inner cladding has an inner cladding radius R2 in a range of 22 $\mu$m to 25 $\mu$m, and the outer cladding has an outer cladding radius R3 in a range of 62.15 $\mu$m to 62.85 $\mu$m.

In accordance with an embodiment of the present disclosure, the outer cladding is made of pure silica. Further, the outer cladding has traces of down dopant near an inner cladding-outer cladding interface.

In accordance with an embodiment of the present disclosure, the core has traces of the down dopant in concentrations less than 2500 parts per million (ppm).

According to the third aspect of the present disclosure, the down dopant is at least one of Chlorine (Cl) and Fluorine (F).

According to the fourth aspect of the present disclosure, the inner cladding has a trench layer defined by a non-step single trench shape. The end of the inner cladding adjacent to the core is deeper than the end of the core adjacent to the inner cladding in the trench layer.

According to the fifth aspect of the present disclosure, a ratio of the core volume to the trench volume is in a range of 0.082 to 0.11. The core has a core volume in a range of 5% $\mu$m$^2$ to 5.5% $\mu$m$^2$, and the trench layer has a trench volume in a range of 48% $\mu$m$^2$ to 55% $\mu$m$^2$.

According to the sixth aspect of the present disclosure, when the outer cladding is undoped, macro bend loss of the optical fiber at a wavelength of 1625 nm, a bend diameter of 60 millimeters (mm), 100 turns of the optical fiber is less than 0.5 Decibel (dB).And, when the outer cladding is down doped, a macro bend loss of the optical fiber at a wavelength of 1625 nm, a bend diameter of 60 mm, 100 turns of the optical fiber is less than 0.1 dB.

According to the seventh aspect of the present disclosure, attenuation of the optical fiber is less than 0.17 dB/KM. And, the total profile volume of the optical fiber is in a range of 50% $\mu$m$^2$ to 60.50% $\mu$m$^2$.

These and other aspects herein will be better appreciated and understood when considered in conjunction with the following description and the accompanying drawings. It should be understood, however, that the following descriptions are given by way of illustration and not of limitation. Many changes and modifications is made within the scope of the disclosure herein without departing from the spirit thereof.

**BRIEF DESCRIPTION OF DRAWINGS**

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a cross-sectional view of an optical fiber in accordance with an embodiment of the present disclosure;

Fig. 2A is a graphical representation illustrating a Refractive Index (RI) profile of the optical fiber with an outer cladding being down doped with a down dopant in accordance with an embodiment of the present disclosure;

Fig. 2B is an enlarged sectional view of the graph illustrating a RI profile of a core of the optical fiber with the outer cladding being down doped with the down dopant in accordance with an embodiment of the present disclosure;

Fig. 2C is another enlarged sectional view of the graph illustrating RI profile of an inner cladding of the optical fiber with the outer cladding being down doped with the down dopant in accordance with an embodiment of the present disclosure;

Fig. 2D is another enlarged sectional view of the graph illustrating RI profile of the outer cladding of the optical fiber with the outer cladding being down doped with the down dopant in accordance with an embodiment of the present disclosure;

Fig. 2E is an enlarged sectional view of the graph illustrating a RI profile of an inner cladding-outer cladding interface of the optical fiber with the outer cladding being down doped with the down dopant in accordance with an embodiment of the present disclosure;

Fig. 3A is a graphical representation illustrating a RI profile of the optical fiber with the outer cladding being undoped in accordance with an embodiment of the present disclosure;

Fig. 3B is an enlarged sectional view of the graph illustrating a RI profile of a core of the optical fiber with the outer cladding being undoped in accordance with an embodiment of the present disclosure;

Fig. 3C is an enlarged sectional view of the graph of illustrating a RI profile of an inner cladding of the optical fiber with the outer cladding being undoped in accordance with an embodiment of the present disclosure;

Fig. 3D is an enlarged sectional view of the graph illustrating a RI profile of the outer cladding of the optical fiber with the outer cladding being undoped in accordance with an embodiment of the present disclosure;

Fig. 3E is an enlarged sectional view of the graph illustrating a RI profile of an inner cladding-outer cladding interface of the optical fiber with the outer cladding being undoped in accordance with an embodiment of the present disclosure.

The optical fiber illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements is included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Optical fiber refers to a medium associated with the transmission of information over long distances in the form of light pulses. The optical fiber uses light to transmit voice and data communications over long distances when encapsulated in a jacket/sheath. The optical fiber is of ITU.T G.657.A2 category. Alternatively, the optical fiber is of ITU.T G.657.A1 or G.657.B3 or G.652.D or other suitable categories. The ITU.T stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

The term "core" of an optical fiber is referred to as the inner most cylindrical structure present in the center of the optical fiber, that is configured to guide the light rays inside the optical fiber.

The term "cladding" of an optical fiber is referred to as one or more layered structure covering the core of an optical fiber from the outside, that is configured to possess a lower refractive index than the refractive index of the core to facilitate total internal reflection of light rays inside the optical fiber. Further, the cladding of the optical fiber include an inner cladding layer coupled to the outer surface of the core of the optical fiber and an outer cladding layer coupled to the inner cladding from the outside.

The term "inner cladding" of the optical fiber is referred to as a layer surrounding to the core of the optical fiber.

The term "outer cladding" of the optical fiber is referred to as a layer surrounding the inner cladding of the optical fiber.

The term "trench layer" referred to as a down doped region with a higher down dopant concentration to decrease the refractive index of the down doped region with respect to pure silica and increase the relative refractive index of the core region.

The term "refractive index" is referred to as the measure of change of speed of light from one medium to another and is particularly measured in reference to speed of light in vacuum. More specifically, the refractive index facilitates measurement of bending of light from one medium to another medium.

The term "relative refractive index" is referred to as the ratio of refractive index of one medium to the refractive index of other medium.

The term "refractive index profile" of the optical fiber is referred to as the distribution of refractive indexes in the optical fiber from the core to the outmost cladding layer of the optical fiber. Based on the refractive index profile, the optical fiber is configured as a step index fiber. The refractive index of the core of the optical fiber is constant throughout the fiber and is higher than the refractive index of the cladding. Further, the optical fiber is configured as a graded index fiber, wherein the refractive index of the core gradually varies as a function of the radial distance from the center of the core.

The term "Mode Field Diameter (MFD)" refers to the size of the light-carrying portion of the optical fiber. For single-mode optical fibers, this region includes the optical fiber core as well as a small portion of the surrounding cladding glass of the optical fiber. The selection of desired MFD helps to describe the size of the light-carrying portion of the optical fiber.

The term "macro bend loss" refers to losses induced in bends around mandrels (or corners in installations), generally more at the cable level or for fibers. The macro bend loss occurs when the fiber cable is subjected to a significant amount of bending above a critical value of curvature. The macro bend loss is also called as large radius loss.

The term "cable cut-off wavelength" refers to a wavelength above which a single-mode fiber will support and propagate only one mode of light. The optical fiber transmits a single mode of optical signal above a predefined cut-off wavelength known as cable cut-off wavelength.

The term "effective area" refers to an optical effective area. A large effective area is always preferred in the optical fiber for an efficient optical transmission.

The term "latency" is referred to as a time delay that occurs when transmitting a light signal over a length of the optical fiber.

The term "attenuation" is referred to as the reduction in power of a light signal as it is transmitted. Specifically, the attenuation is caused by passive media components such as cables, cable splices, and connectors.

The term "Optical Signal to Noise Ratio (OSNR)" is referred to as the ratio of signal power to noise power, over a specific spectral bandwidth, at any point in an optical link.

The term "core peak" is referred to as the maximum refractive index value of the core of the optical fiber.

The term "up-doping" is referred to as adding doping materials to facilitate increase in the refractive index of a particular layer or part of optical fiber. The materials configured to facilitate up-doping are known as up-dopants.

The term "down-doping" is referred to as adding doping materials to facilitate decrease in the refractive index of a particular layer or part of optical fiber. The materials configured to facilitate down-doping are known as down-dopants.

The term "undoped" (or unintentionally doped) means that a region of the optical fiber contains a dopant not intentionally added to the region during fabrication, but the term does not exclude low levels of background doping that is inherently incorporated during the fabrication process. Such background doping levels are low in that they have an insignificant effect on the refractive index of the undoped region.

The optical fiber 100 is complied with the G.654.E standard issued by International Telecommunications Union - Telecommunications Sector (ITU-T), that is latest revision of "ITU-T Recommendation G.654 - Characteristic of a Cut-Off Shifted Single-mode Optical Fiber and Cable". The former revisions of ITU-T G.654 standard include G.654.A, G.654.B, G.654.C and G.654.D that describes optical fibers typically used in submarine applications.

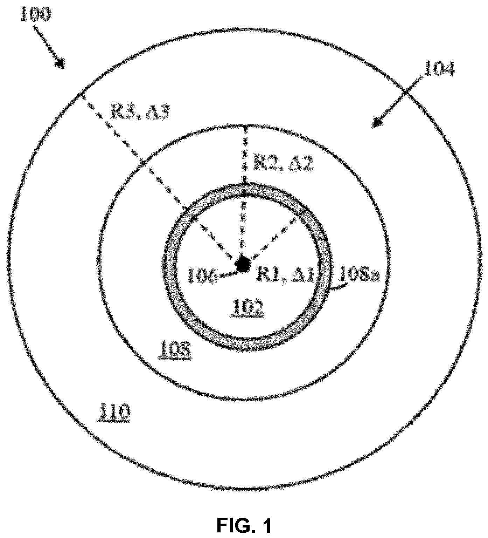

Fig.1 illustrates a cross-sectional view of an optical fiber 100. In particular, the optical fiber 100 is Outside Vapor Deposition (OVD) manufactured optical fiber having an immediate fluorine cladding that induces G654C/E properties in the optical fiber 100. In particular, the optical fiber 100 is a G.654.E fiber which is a cut-off wavelength shift single-mode optical fiber.

The optical fiber 100 have a core 102 and a cladding 104, a central axis 106. In particular, the core 102 and the cladding 104 are arranged along the central axis 106 running longitudinally, *i.e.,* generally concentric to the central axis 106. Moreover, the cladding 104 includes an inner cladding 108 and an outer cladding 110.

In accordance with an embodiment, of the present disclosure, the optical fiber 100 have a Refractive Index (RI) profile generated by virtue of the core 102 being up doped with an up dopant, the inner cladding 108 being down doped with a down dopant, and the outer cladding 110 being one of, undoped (*i.e.,* made up of pure silica) and down doped with a down dopant.

In accordance with an embodiment, of the present disclosure, the core 102 is a cylindrical fiber that run along a length of the optical fiber 100 and is configured to guide an optical signal. In particular, the core 102 is a confinement region of the optical fiber 100. Moreover, the core 102 is made up of a material selected from at least one of, a pure silica glass, Silicon tetrachloride ($SiCl_4$), Germanium tetrachloride ($GeCl_4$), and the like. Further, the core 102 is made up of a silica glass doped with the up dopant.

Furthermore, the core 102 is up-doped with the up-dopant that increases net refractive index of the optical fiber 100 to control macro bend losses., the up-dopant is Germanium (Ge). The up dopant Germanium (Ge) is preferred over other up dopant. Aspects of the present disclosure are intended to include and/or otherwise cover any type of the up dopant for the core 102, without deviating from the scope of the present disclosure.

In alternate aspects of the present disclosure, the core 102 have traces of chlorine (Cl) and fluorine (F). Particularly, concentrations of Cl and F in the core 102 is less than 2500 parts per million (ppm) and 1500 ppm, respectively. Moreover, the traces of chlorine (Cl) and fluorine (F) are used to up dope the core 102 as the chlorine (Cl) and the fluorine (F) facilitates in reduction of stress in an optical fiber preform and hence in the optical fiber 100. Further, the traces of the chlorine (Cl) and the fluorine (F) act as a core viscosity reduction agent such that the core 102 becomes softer (*i.e.,* easy to flow to provide relaxation and ease in releasing of stress from the hot optical fiber preform).

In accordance with an embodiment of the present disclosure, the core 102 has a core radius R1 in a range of 4.5 micrometres ($\mu$m) to 6.5 $\mu$m. The core volume that is defined as a volume acquired by the core 102 with respect to the core radius R1. The core volume have a magnitude in micrometres square ($\mu m^2$) that is determined by the following equation:

$$= \int_{R0}^{R1} \Delta\,(r)\,r dr \Big|$$

In some aspects of the present disclosure, the magnitude of the core volume of the core 102 as determined by the above equation is in a range of 5% $\mu m^2$ to 5.5% $\mu m^2$. In an exemplary example, the core volume of the core 102 is 5.25% $\mu m2$.

In accordance with an embodiment of the present disclosure, the cladding 104 having the inner cladding 108 and the outer cladding 110 is a layer made up of a material having a lower refractive index and is in immediate contact with the core 102 made up of a material of higher refractive index. In particular, the inner cladding 108 surrounds the core 102. Moreover, the inner cladding 108 is disposed adjacent to the core 102.

In some aspects of the present disclosure, an end of the inner cladding 108 that is adjacent to the core 102 (*i.e.,* at an intersection of the core 102 and the inner cladding 108) is substantially deeper when compared to an end of the core 102 adjacent to the inner cladding 108 (*i.e.,* at an intersection of the core 102 and the inner cladding 108). In particular, the deeper end of the inner cladding 108 at the intersection of the core 102 and the inner cladding 108 forms a trench layer 108a that has a non-step single trench shape. Moreover, the non-step single trench shape is preferred over stepped trench because the manufacturing process of the optical fiber with non-step trench is less complex and less time consuming as compared to the manufacturing process of the optical fiber comprising stepped trench.

In accordance with an embodiment of the present disclosure, the trench layer 108a has a trench radius R2 (*i.e.,* inner cladding radius) in a range of 22 $\mu m$ to 25 $\mu m$.

In some aspects of the present disclosure, the trench layer 108a have a trench volume that is defined as a volume acquired by region between the core radius R1 and the trench radius R2. The trench volume have a magnitude in $\mu m^2$ that is determined by the following equation:

$$= \int_{R1}^{R2} \Delta\left(r\right) r\,dr$$

In accordance with an embodiment of the present disclosure, the magnitude of the trench volume of the trench layer (*i.e.,* the inner cladding 108) determined by the above equation is in a range of 48% $\mu m^2$ to 55% $\mu m^2$. In one exemplary example, the trench volume of the trench layer 108a is equal to 48.59% $\mu m^2$.

In some aspects of the present disclosure, the trench layer 108a have a trench delta that is in a range of 0.22% to 0.32%. Preferably, the trench layer have the trench delta of 0.24%. The trench delta is determined by the following equation:

$$\Delta\left(\%\right) = \frac{n1^2 - n2^2}{2*n1^2} * 100$$

Where, $\Delta$ is trench delta,
n1 is refractive index of trench layer,
n2 is refractive index of pure silica.

In an exemplary example, refractive index n1 of the trench layer 108a is 1.44332 and refractive index of pure silica is 1.44692, the trench delta determined using above equation is 0.25%.

In accordance with an embodiment of the present disclosure, the inner cladding 108 is made up of a material such as, but not limited to, a silica glass. In some alternate aspects of the present disclosure, the inner cladding 108 is made up of a combination of Silicon tetrachloride (SiCl4) and Cl. Particularly, the inner cladding 108 is made up of a silica glass doped with the down dopant. Moreover, the inner cladding 108 down doped with the down dopant decrease values of net refractive index of the inner cladding 108 controls macro bend losses in the optical fiber 100.

The outer cladding 110 surround the inner cladding 108 and is made up of a material such as but not limited to, a silica glass. In some aspects of the present disclosure, the outer cladding 110 is made up of a silica glass that is undoped, or down doped with a down dopant. The down dopant used to dope the outer cladding 110 is similar to the down dopant used to down dope the inner cladding 108. Alternatively, the down dopant used to dope the outer cladding 110 is different than the down dopant used to down dope the inner cladding 108. The outer cladding 110 have an outer cladding radius R3 that is in a range of 62.15 $\mu m$ to 62.85 $\mu m$.

In accordance with an embodiment of the present disclosure, the optical fiber 100 have a total profile volume. The total profile volume have a magnitude in $\mu m^2$ that is determined by the following equation:

$$= \int_{R0}^{R3} \Delta\left(r\right) r\,dr$$

In some aspects of the present disclosure, the magnitude of the profile volume as determined by the above equation is in a range of 50% $\mu m^2$ to 60.50% $\mu m^2$. The profile volume is determined by surface integrating the relative refractive index as a function of radial change. In one example, the total profile volume is determined with integration limits of core center to outer cladding radius R3 (0 to 62.5 $\mu m$).

In accordance with an embodiment of the present disclosure, the trench volume of the trench layer 108a is in a range of 45.00% $\mu m^2$ to 55.00% $\mu m^2$. In some aspects of the present disclosure, the trench layer 108a have a trench delta that is in a range of 0.22% to 0.32

In accordance with an embodiment of the present disclosure, a ratio of the core volume to the trench volume is in a range of 0.082% to 0.11 %. The minimum value in the range of the ratio of the core volume to the trench volume is determined by dividing the minimum value of the core volume by the maximum value of the trench volume. For example, the minimum value of core volume is 5% $\mu m^2$ and the maximum value of the trench volume is 55.00% $\mu m^2$, the minimum value of the ratio of the core volume to the trench volume is 0.09%. The maximum value in the range of the ratio of the core volume to the trench volume is determined by dividing the maximum value of the core volume by the minimum value of the trench volume. For example, the maximum value of core volume is 5.5% $\mu m^2$ and the minimum value of the trench volume is 45.00% $\mu m^2$, the maximum value of the ratio of the core volume to the trench volume is 0.12%.

In accordance with an embodiment of the present disclosure, the core volume in the range of 5% $\mu m^2$ to 5.5% $\mu m^2$, the trench volume in the range of 45% $\mu m^2$ to 55% $\mu m^2$, and the profile volume in the range of 50% $\mu m^2$ to 60.50% $\mu m^2$ facilitate to get G654E/C parameters in the optical fiber 100. The G654E/C parameters is, but not limited to, MFD at 1550 nm in range of 9.5 to 13.0, Cable Cut off of less than 1530 nm, Attenuation at 1550 nm of less than 0.17 dB/Km, Dispersion in range of about 17 picosecond per nanometer-kilometer (ps/(nm.Km)) to 23 ps/(nm.Km) at wavelength of about 1550 nm. When the outer cladding 110 is undoped, a Macro bend loss at a wavelength of 1625 nm, 60 mm diameter and 100 turns of the optical fiber 100 is less than 0.5 Decibel (dB). When the outer cladding 110 is down doped, a Macro bend loss at a wavelength of 1625 nm, 60 mm diameter and 100 turns of the optical fiber is less than 0.1 dB.

In an exemplary scenario, when the optical fiber 100 has the outer cladding 110 that is down doped with the down dopant (i.e., F), then the core radius R1 is in a range of 5.5 $\mu m$ to 6.5 $\mu m$, a maximum refractive index $\Delta 1max$ of the core 102 is in a range of 0.38% to 0.45%. Particularly, the core radius R1 is 5.92 $\mu m$, the maximum refractive index $\Delta 1max$ of the core 102 is 0.41%. The inner cladding radius R2 is in a range of 22 $\mu m$ to 25 $\mu m$, a maximum refractive index $\Delta 2max$ of the inner cladding 108 is in a range of 0.26% to 0.32%. Moreover, the inner cladding radius R2 is 22.5 $\mu m$, the maximum refractive index $\Delta 2max$ of the inner cladding 108 is 0.28%. The outer cladding radius R3 is in a range of 62.15 $\mu m$ to 62.85 $\mu m$, a maximum refractive index $\Delta 3max$ of the outer cladding 110 is in a range of 0.10% to 0.20%. Further, the outer cladding radius R3 is 62.5 $\mu m$, the maximum refractive index $\Delta 3max$ of the outer cladding 110 is 0.15%. The core volume is in a range of 5% $\mu m^2$ to 5.5% $\mu m^2$, the trench volume is in a range of 48% $\mu m^2$ to 55% $\mu m^2$, and the total profile volume is in a range of 53% $\mu m^2$ to 60.5% $\mu m^2$. In one example, the core volume is 5.01 % $\mu m^2$, the trench volume is 49.15% $\mu m^2$, and the total profile volume is 54.16% $\mu m^2$.

In another exemplary scenario, when the optical fiber 100 has the outer cladding 110 that is undoped, the core radius R1 is in a range of 4.5 $\mu m$ to 5.5 $\mu m$, the maximum refractive index $\Delta 1max$ of the core 102 is in a range of 0.38% to 0.45%. In particular, the core radius R1 is 5 $\mu m$ and the maximum refractive index $\Delta 1max$ of the core 102 is 0.42%. The inner cladding radius R2 is in a range of 22 $\mu m$ to 25 $\mu m$, the maximum refractive index $\Delta 2max$ of the inner cladding 108 is in a range of 0.22% to 0.26%. Moreover, the cladding radius R2 is 23.5 $\mu m$ and the maximum refractive index $\Delta 2max$ of the inner cladding 108 is 0.24%. The outer cladding radius R3 is in a range of 62.15 $\mu m$ to 62.85 $\mu m$, the maximum refractive index $\Delta 3max$ of the outer cladding 110 is in a range of -0.05% to 0.05%. Further, the cladding radius R3 is 62.5 $\mu m$ and the maximum refractive index $\Delta 3max$ of the outer cladding 110 is 0. The core volume is in a range of 5% $\mu m^2$ to 5.5% $\mu m^2$, the trench volume is in a range of 45% $\mu m^2$ to 50% $\mu m^2$, and the total profile volume is in a range of 50% $\mu m^2$ to 55.5% $\mu m^2$. In one example, the core volume is 5.25% $\mu m^2$, the trench volume is 48.59% $\mu m^2$, and the total profile volume is 53.84% $\mu m^2$.

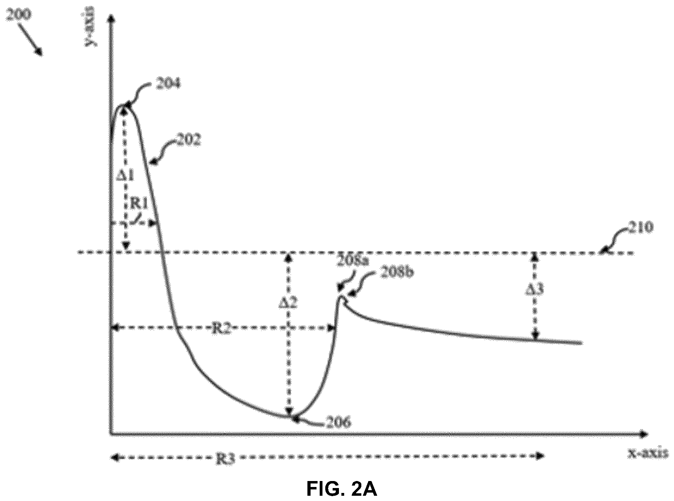

Fig.2A illustrates a graph 200 illustrating a Refractive Index (RI) profile of the optical fiber 100 with the outer cladding 110 being down doped with the down dopant. The graph 200 is a radius versus relative refractive index graph such that an x-axis of the graph 200 represents values of the radius R1, the radius R2, and the radius R3 of the core 102, the inner cladding 108 (i.e., the trench layer 108a), and the outer cladding 110, respectively, and a y-axis of the graph 200 represents values of the refractive index $\Delta 1$, the refractive index $\Delta 2$, and the refractive index $\Delta 3$ of the core 102, the inner cladding 108 (i.e., the trench layer 108a), and the outer cladding 110, respectively. The graph 200 has a curve 202 that represent the RI profile of the optical fiber 100. As illustrated the core 102 being up doped with the up dopant, the inner cladding 108 being down doped with the down dopant, and the down doped outer cladding 110 generates the RI profile. Moreover, the core 102 defines a core region such that the refractive index $\Delta 1$ of the core 102 is realized in the core region (i.e., within the radius R1 of the core 102). Further, the inner cladding 108 (i.e., the trench layer 108a) defines a trench region such that the refractive index $\Delta 2$ of the inner cladding 108 (i.e., the trench layer 108a) is realized in the trench region (i.e., within the radius R2 of the inner cladding 108). Furthermore, the outer cladding 110 define an outer cladding region such that the refractive index $\Delta 3$ of the outer cladding 110 is realized in the outer cladding region (i.e., within the radius R3 of the outer cladding 110).

The curve 202 illustrates a value of the refractive index $\Delta 1$ is maximum at a core peak 204 in the core region that is up doped by the up dopant (i.e., GE). Further, the curve 202 transitions from the core region to the trench region which is down doped with the down dopant (i.e., F) such that the curve 202 dips in the trench region (i.e., the region defined by R2 - R1). Specifically, the curve 202 illustrates that a value of the refractive index $\Delta 2$ is minimum at an inner cladding dip point 206 in the trench region that is down doped by the down dopant (*i.e.*, F).

The curve 202 further transitions from the trench region to the outer cladding region defined by the outer cladding 110 that is down doped with the down dopant such that the curve 202 peaks to an outer cladding peak 208a at an inner cladding-outer cladding interface 208b that is lesser than the core peak 204. Further, the curve 202 transitions from the core region to the trench region and further from the trench region to the outer cladding region (*i.e.*, the region defined by R3 - R2) thus generating the RI profile that is defined by the core peak 204 and the outer cladding peak 208a at the inner cladding-outer cladding interface 208b.

The graph 200 has a straight line 210 that defines the refractive index of pure silica. Further, the curve 202 dips after the inner cladding-outer cladding interface 208b that defines that the refractive index Δ3 of the outer cladding 110 decrease gradually and is less than the refractive index of pure silica which is due to the fact the outer cladding 110 is down doped using the down dopant.

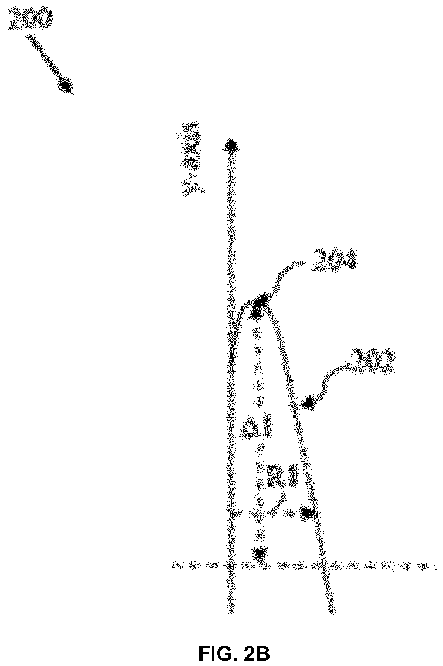

Fig. 2B is an enlarged sectional view of the graph 200 illustrating a RI profile of the core 102 of the optical fiber 100 with the outer cladding 110 being down doped with the down dopant. The core 102 defines the core region such that the refractive index Δ1 of the core 102 is realized in the core region (*i.e.*, within the radius R1 of the core 102). Moreover, the curve 202 illustrates that the value of the refractive index Δ1 is maximum at the core peak 204 in the core region that is up doped by the up dopant (*i.e.*, GE).

In one exemplary example, the core volume of the core 102 is 5.25% μm2. In particular, the core volume is determined by surface integrating the relative refractive index as a function of radial change. In another example, the core volume is determined with integration limits of core center to core radius R1 (0 to 5.35 μm).

Further, the curve 202 transitions from the core region to the trench region which is down doped with the down dopant (*i.e.*, F) such that the curve 202 dips in the trench region (*i.e.*, the region defined by R2 - R1).

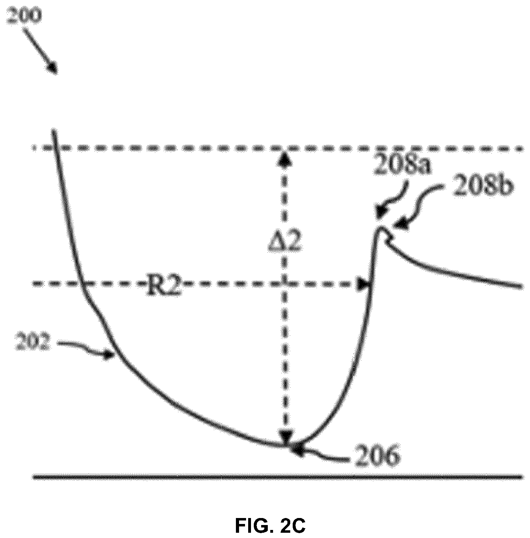

Fig. 2C is another enlarged sectional view of the graph 200 illustrating a RI profile of the inner cladding 108 of the optical fiber 100 with the outer cladding 110 being down doped with the down dopant. The inner cladding 108 (*i.e.*, the trench layer 108a) defines the trench region such that the refractive index Δ2 of the inner cladding 108 (*i.e.*, the trench layer 108a) is realized in the trench region (*i.e.*, within the radius R2 of the inner cladding 108). The deeper end of the inner cladding 108 at the intersection of the core 102 and the inner cladding 108 form a trench layer 108a that has a non-step single trench shape as illustrated by the curve 202. Moreover, the non-step single trench shape is preferred over stepped trench because the manufacturing process of the optical fiber with non-step trench is less complex and less time consuming as compared to the manufacturing process of the optical fiber comprising stepped trench. Further, the curve 202 illustrates that the value of the refractive index Δ2 is minimum at the inner cladding dip point 206 in the trench region that is down doped by the down dopant (*i.e.*, F). The non-step trench shape of the trench layer 108a comprising only one dip point 206.

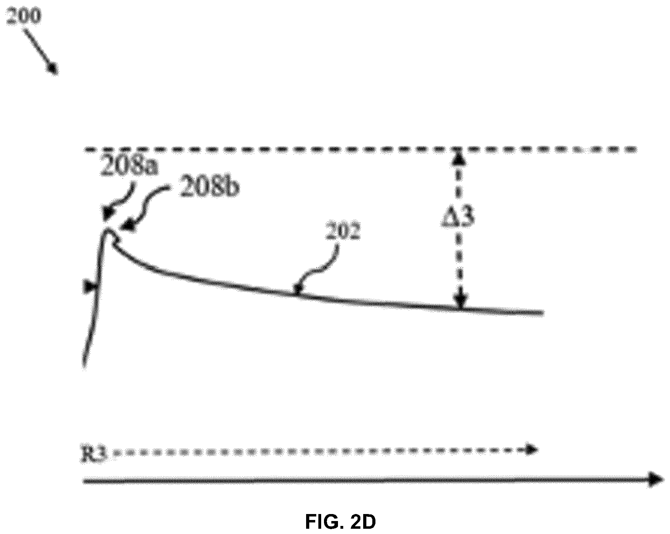

Fig.2D is another enlarged sectional view of the graph 200 illustrating a RI profile of the outer cladding 110 of the optical fiber 100 with the outer cladding 110 being down doped with the down dopant. In particular, the outer cladding 110 define the outer cladding region such that the refractive index Δ3 of the outer cladding 110 in the outer cladding region (*i.e.*, within the radius R3 of the outer cladding 110). Moreover, the curve 202 further transitions from the trench region to the outer cladding region defined by the outer cladding 110 that is down doped with the down dopant such that the curve 202 peaks to an outer cladding peak 208a at an inner cladding-outer cladding interface 208b that is lesser than the core peak 204. Further, the curve 202 transitions from the core region to the trench region and further from the trench region to the outer cladding region (*i.e.*, the region defined by R3 - R2) thus generating the RI profile that is defined by the core peak 204 and the outer cladding peak 208a at the inner cladding-outer cladding interface 208b. The graph 200 has the straight line 210 that defines the refractive index of pure silica. As illustrated, the curve 202 dips after the inner cladding-outer cladding interface 208b that defines that the refractive index Δ3 of the outer cladding 110 decrease gradually and is less than the refractive index of pure silica which is due to the fact the outer cladding 110 is down doped using the down dopant.

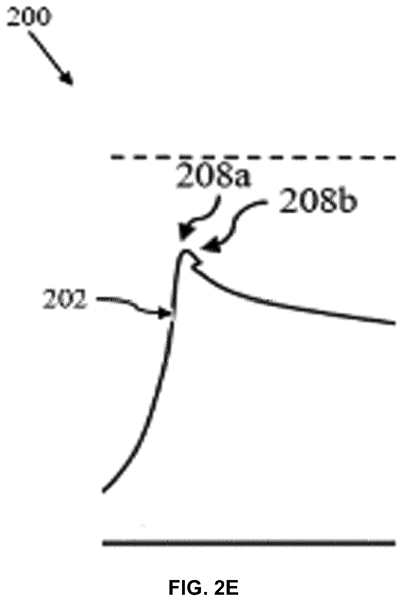

Fig. 2E is an enlarged sectional view illustrating a RI profile of the inner cladding-outer cladding interface 208b of the optical fiber 100 with the outer cladding 110 being down doped with the down dopant. The curve 202 transitions from the trench region to the outer cladding region defined by the outer cladding 110 that is down doped with the down dopant such that the curve 202 peaks to the outer cladding peak 208a at the inner cladding-outer cladding interface 208b that is lesser than the core peak 204. Moreover, the curve 202 transitions from the core region to the trench region and further from the trench region to the outer cladding region (*i.e.*, the region defined by R3 - R2) thus generating the RI profile that is defined by the core peak 204 and the outer cladding peak 208a at the inner cladding-outer cladding interface 208b. The graph 200 further has a straight line 210 that defines the refractive index of pure silica.

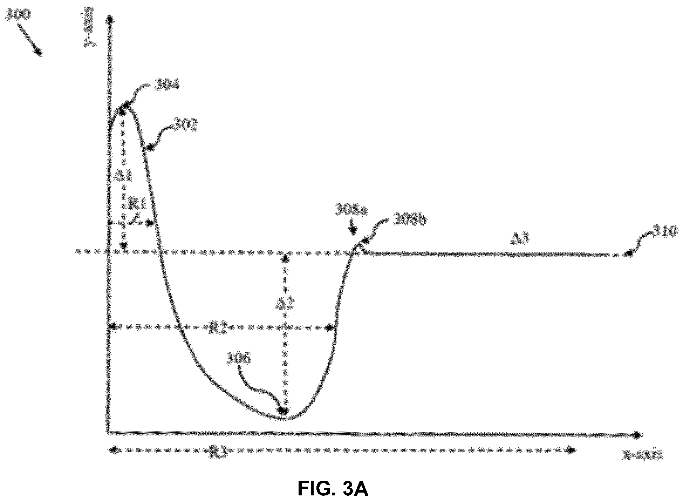

Fig. 3A is a graph 300 representing a RI profile of the optical fiber 100 with the outer cladding 110 being undoped. The graph 300 is a radius versus relative refractive index graph such that an x-axis of the graph 300 represents values of the radius R1, the radius R2, and the radius R3 of the core 102, the inner cladding 108 (*i.e.*, the trench layer 108a), and the outer cladding 110, respectively, and a y-axis of the graph 200 represents values of the refractive index Δ1, the refractive index Δ2, and the refractive index Δ3 of the core 102, the inner cladding 108 (*i.e.*, the trench layer 108a), and the outer cladding 110. The graph 300 has a curve 302 that represent the RI profile of the optical fiber 100. Moreover, the core 102 being up doped with the up dopant, the inner cladding 108 being down doped with the down dopant, and the undoped outer cladding 110 generates the RI profile. Further, the core 102 defines a core region such that the refractive index △1 of the core 102 is realized in the core region (*i.e.,* within the radius R1 of the core 102). Furthermore, the inner cladding 108 (*i.e.,* the trench layer 108a) defines a trench region such that the refractive index △2 of the inner cladding 108 (*i.e.,* the trench layer 108a) is realized in the trench region (*i.e.,* within the radius R2 of the inner cladding 108). The outer cladding 110 define an outer cladding region such that the refractive index △3 of the outer cladding 110 is realized in the outer cladding region (*i.e.,* within the radius R3 of the outer cladding 110).

The curve 302 illustrates a value of the refractive index △1 is maximum at a core peak 304 in the core region that is up doped by the up dopant (*i.e.,* GE). Further, the curve 302 transitions from the core region to the trench region which is down doped with the down dopant (*i.e.,* F) such that the curve 302 dips in the trench region (*i.e.,* the region defined by R2 - R1). Specifically, the curve 302 illustrates that a value of the refractive index △2 is minimum at an inner cladding dip point 306 in the trench region that is down doped by the down dopant (*i.e.,* F). The curve 302 further transitions from the trench region to the outer cladding region (*i.e.,* the region defined by R3 - R2) defined by the outer cladding 110 that is undoped such that the curve 302 peaks to an outer cladding peak 308a at an inner cladding outer cladding interface 308b that is lesser than the core peak 304.

The graph 300 further has a straight line 310 that defines the relative refractive index of the pure silica. The curve 302 transitions from the trench region to the outer cladding region defined by the outer cladding 110 and follows the straight line 310 which is due to the fact the outer cladding 110 is undoped. The outer cladding 110 has traces of the down dopant that is near the inner cladding-outer cladding interface 308b. Preferably, the traces of the down dopant near the near the inner cladding-outer cladding interface 308b is negligible.

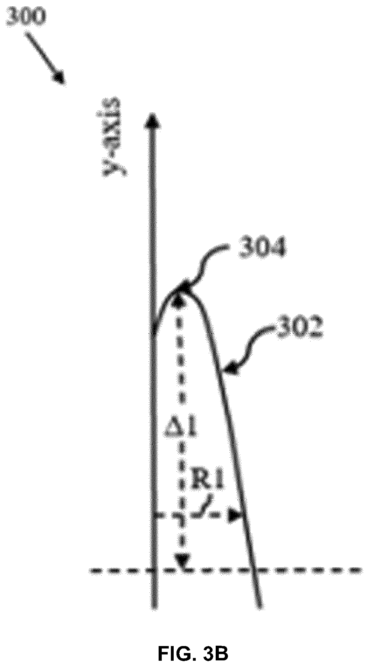

Fig. 3B is an enlarged sectional view of the graph 300 illustrating a RI profile of the core 102 of the optical fiber 100 with the outer cladding 110 being undoped. The core 102 defines the core region such that the refractive index △1 of the core 102 is realized in the core region (*i.e.,* within the radius R1 of the core 102). Moreover, the curve 302 illustrates that the value of the refractive index △1 is maximum at the core peak 304 in the core region that is up doped by the up dopant (*i.e.,* GE).

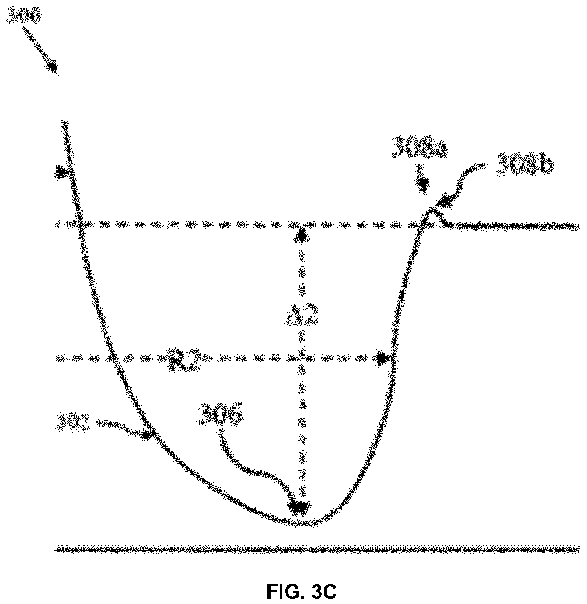

Fig. 3C is another enlarged sectional view of the graph 300 illustrating a RI profile of the inner cladding 108 of the optical fiber 100 with the outer cladding 110 being undoped. The inner cladding 108 (*i.e.,* the trench layer 108a) defines the trench region such that the re-

fractive index △2 of the inner cladding 108 (*i.e.,* the trench layer 108a) is realized in the trench region (*i.e.,* within the radius R2 of the inner cladding 108). The deeper end of the inner cladding 108 at the intersection of the core 102 and the inner cladding 108 form a trench layer 108a that has a non-step single trench shape as illustrated by the curve 302. The non-step single trench shape is preferred over stepped trench because manufacturing process of the optical fiber with non-step trench is less complex and less time consuming as compared to the manufacturing process of the optical fiber comprising stepped trench. Moreover, the curve 302 transitions from the core region to the trench region which is down doped with the down dopant (*i.e.,* F) such that the curve 302 dips in the trench region (*i.e.,* the region defined by R2 - R1). Further, the curve 302 illustrates that the value of the refractive index △2 is minimum at the inner cladding dip point 306 in the trench region that is down doped by the down dopant (*i.e.,* F). The non-step trench shape of the trench layer 108a comprising only one dip point 306.

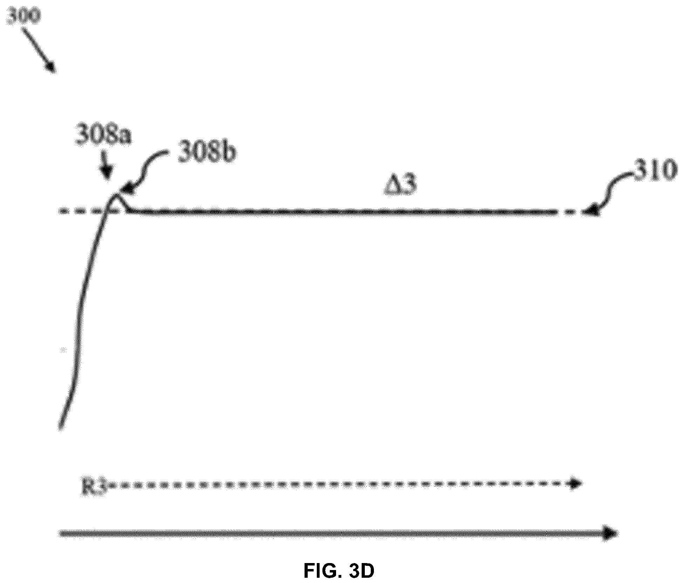

Fig. 3D is yet another enlarged sectional view of the graph 300 representing a RI profile of the outer cladding 110 of the optical fiber 100 with the outer cladding 110 being undoped. The outer cladding 110 define the outer cladding region such that the refractive index △3 of the outer cladding 110 is realized in the outer cladding region (*i.e.,* within the radius R3 of the outer cladding 110). Further, the curve 302 transitions from the trench region to the outer cladding region (*i.e.,* the region defined by R3 - R2) defined by the outer cladding 110 that is undoped such that the curve 302 peaks to the outer cladding peak 308a at the inner cladding outer cladding interface 308b that is lesser than the core peak 304. Furthermore, the graph 300 has the straight line 310 that defines the relative refractive index of the pure silica. The curve 302 transitions from the trench region to the outer cladding region defined by the outer cladding 110 and follows the straight line 310 which is due to the fact the outer cladding 110 is undoped.

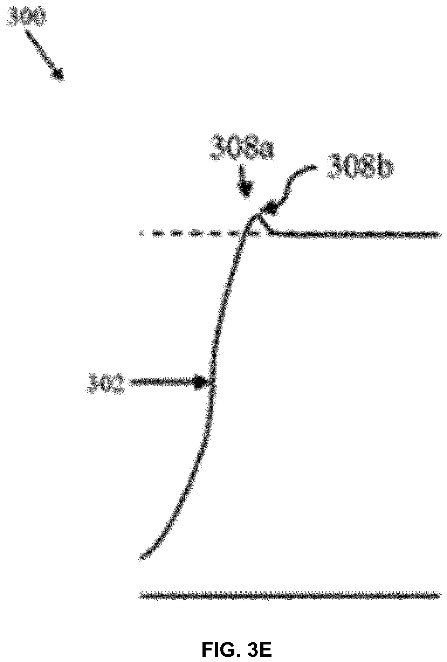

Fig. 3E is yet another enlarged sectional view of the graph 300 representing a RI profile of the inner cladding-outer cladding interface 308a of the optical fiber 100 with the outer cladding 110 being undoped. The curve 302 further transitions from the trench region to the outer cladding region (*i.e.,* the region defined by R3 - R2) defined by the outer cladding 110 that is undoped such that the curve 302 peaks to the outer cladding peak 308a at the inner cladding outer cladding interface 308b that is lesser than the core peak 304. Moreover, the graph 300 further has the straight line 310 that defines the relative refractive index of the pure silica. Further, the curve 302 transitions from the trench region to the outer cladding region defined by the outer cladding 110 and follows the straight line 310 which is due to the fact the outer cladding 110 is undoped.

Advantageously, the present disclosure provides an optical fiber 100 with a fluorine doped cladding (*i.e.,* the inner cladding 108) adjacent to the core 102 that brings G654E and G654C properties in the optical fiber 100. Moreover, the optical fiber 100 with an immediate inner cladding 108 that is down doped with fluorine induce G654E and G654C category optical fiber properties in the optical fiber 100 with predefined core volume and trench volume thus providing good confinement and improved bending loss.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance suggest or render expedient, but such are intended to cover the application or implementation without departing from the spirit or scope of the claims of the present technology.

In a case that no conflict occurs, the embodiments in the present disclosure and the features in the embodiments is mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber (100) **characterized in that**:

   a core (102) that is up doped with an up dopant; and
   a cladding (104) having inner and outer claddings (108, 110) characterize **in that** the inner cladding (108) is down doped with a down dopant and is disposed adjacent to the core (102) and the outer cladding (110) is at least one of: undoped and down doped, wherein the up dopant is Germanium (Ge), wherein the optical fiber (100) has (i) a Mode Field Diameter (MFD) in a range of 9.5 $\mu$m to 13.0 $\mu$m and (ii) a Cable Cut off of less than 1530 nm.

2. The optical fiber (100) as claimed in claim 1, wherein the core (102) has a core radius R1 in a range of 4.5 micrometres ($\mu$m) to 6.5 $\mu$m, the inner cladding (108) has an inner cladding radius R2 in a range of 22 $\mu$m to 25 $\mu$m, and the outer cladding (110) has an outer cladding radius R3 in a range of 62.15 $\mu$m to 62.85 $\mu$m.

3. The optical fiber (100) as claimed in claim 1, wherein the outer cladding (110) has traces of down dopant near an inner cladding-outer cladding interface (308b).

4. The optical fiber (100) as claimed in claim 1, wherein the core (102) has traces of the down dopant in concentrations less than 2500 parts per million (ppm).

5. The optical fiber (100) as claimed in claim 4, wherein the down dopant is at least one of Chlorine (Cl) and Fluorine (F).

6. The optical fiber (100) as claimed in claim 1, wherein the outer cladding (110) is made of pure silica.

7. The optical fiber (100) as claimed in claim 1, wherein the inner cladding (108) has a trench layer (108a) defined by a non-step single trench shape.

8. The optical fiber (100) as claimed in claim 1, wherein an end of the inner cladding (108) adjacent to the core (102) is deeper than an end of the core (102) adjacent to the inner cladding (108) in the trench layer (108a).

9. The optical fiber (100) as claimed in claim 1, wherein the inner cladding (108) has a trench delta in a range of 0.22% to 0.32%.

10. The optical fiber (100) as claimed in claim 1, wherein an attenuation of the optical fiber (100) is less than 0.17 dB/KM.

11. The optical fiber (100) as claimed in claim 1, wherein a ratio of the core volume to the trench volume is in a range of 0.082 to 0.11.

12. The optical fiber (100) as claimed in claim 1, wherein, at least one of, (i) the core (102) has a core volume in a range of 5% $\mu$m$^2$ to 5.5% $\mu$m$^2$, and (ii) the trench layer (108a) has a trench volume in a range of 48% $\mu$m$^2$ to 55% $\mu$m$^2$.

13. The optical fiber (100) as claimed in claim 1, wherein a total profile volume of the optical fiber (100) is in a range of 50% $\mu$m$^2$ to 60.50% $\mu$m$^2$.

14. The optical fiber (100) as claimed in claim 1, wherein when the outer cladding (110) is undoped, macro bend loss of the optical fiber (100) at a wavelength of 1625 nm, a bend diameter of 60 millimeters (mm), 100 turns of the optical fiber (100) is less than 0.5 Decibel (dB).

15. The optical fiber (100) as claimed in claim 1, wherein when the outer cladding (110) is down doped, a macro bend loss of the optical fiber (100) at a wavelength of 1625 nm, a bend diameter of 60 mm, 100 turns of the optical fiber (100) is less than 0.1 dB.

FIG. 1

**FIG. 2A**

FIG. 2B

FIG. 2C

**FIG. 2D**

200

208a

208b

202

FIG. 2E

**FIG. 3A**

FIG. 3B

**FIG. 3C**

**FIG. 3D**

300

308a 308b

302

FIG. 3E

Europäisches
Patentamt

European
Patent Office

Office européen
des brevets

# EUROPEAN SEARCH REPORT

Application Number

EP 23 18 1421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 255 138 A1 (LUCENT TECHNOLOGIES INC [US]) 6 November 2002 (2002-11-06) * paragraph [0024] – paragraph [0030]; figures 5a,b; table * | 1-15 | INV. G02B6/02 G02B6/036 |
| X | WO 2021/187475 A1 (SUMITOMO ELECTRIC IND LTD) 23 September 2021 (2021-09-23) * figure 1 * & EP 4 123 350 A1 (SUMITOMO ELECTRIC INDUSTRIES [JP]) 25 January 2023 (2023-01-25) * paragraph [0012] – paragraph [0025]; tables 1,2 * | 1-15 | ADD. G02B6/028 |
| X | US 2015/301277 A1 (CHEN SU [CN] ET AL) 22 October 2015 (2015-10-22) * paragraph [0017] – paragraph [0027]; figure 2; tables 1,2 * | 1-15 | |
| X | EP 3 330 756 A1 (YANGTZE OPTICAL FIBRE AND CABLE JOINT STOCK LTD [CN]) 6 June 2018 (2018-06-06) * paragraph [0032] – paragraph [0039]; figure; tables 1,2 * | 1-15 | TECHNICAL FIELDS SEARCHED (IPC) G02B |
| X | EP 3 199 992 A1 (FUJIKURA LTD [JP]) 2 August 2017 (2017-08-02) * paragraphs [0034], [0052], [0089] – [0096] – paragraph [0027]; table 1 * | 1-15 | |
| E | EP 4 209 811 A1 (STERLITE TECH LTD [IN]) 12 July 2023 (2023-07-12) * paragraph [0030] – paragraph [0037]; figures 1,2 * | 1-5,7,8, 10,15 | |

The present search report has been drawn up for all claims

| Place of search | Date of completion of the search | Examiner |
|---|---|---|
| The Hague | 16 November 2023 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 1421

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | | Publication date | Patent family member(s) | | Publication date |
|---|---|---|---|---|---|
| EP 1255138 | A1 | 06-11-2002 | DE | 60100568 T2 | 17-06-2004 |
| | | | EP | 1255138 A1 | 06-11-2002 |
| | | | JP | 4065716 B2 | 26-03-2008 |
| | | | JP | 2002365464 A | 18-12-2002 |
| | | | US | 2002186941 A1 | 12-12-2002 |
| WO 2021187475 | A1 | 23-09-2021 | BR | 112022008355 A2 | 18-10-2022 |
| | | | CN | 114641714 A | 17-06-2022 |
| | | | EP | 4123350 A1 | 25-01-2023 |
| | | | JP | WO2021187475 A1 | 23-09-2021 |
| | | | KR | 20220144793 A | 27-10-2022 |
| | | | US | 2023037687 A1 | 09-02-2023 |
| | | | WO | 2021187475 A1 | 23-09-2021 |
| US 2015301277 | A1 | 22-10-2015 | CN | 103257393 A | 21-08-2013 |
| | | | JP | 6082875 B2 | 22-02-2017 |
| | | | JP | 2015536474 A | 21-12-2015 |
| | | | KR | 20150063109 A | 08-06-2015 |
| | | | US | 2015301277 A1 | 22-10-2015 |
| | | | WO | 2014067291 A1 | 08-05-2014 |
| EP 3330756 | A1 | 06-06-2018 | CN | 104991307 A | 21-10-2015 |
| | | | EP | 3330756 A1 | 06-06-2018 |
| | | | ES | 2900735 T3 | 18-03-2022 |
| | | | JP | 6529666 B2 | 12-06-2019 |
| | | | JP | 2018517185 A | 28-06-2018 |
| | | | KR | 20180006975 A | 19-01-2018 |
| | | | PL | 3330756 T3 | 11-04-2022 |
| | | | US | 2018128968 A1 | 10-05-2018 |
| | | | WO | 2017020457 A1 | 09-02-2017 |
| EP 3199992 | A1 | 02-08-2017 | CN | 106716198 A | 24-05-2017 |
| | | | EP | 3199992 A1 | 02-08-2017 |
| | | | JP | 6393338 B2 | 19-09-2018 |
| | | | JP | WO2016047675 A1 | 01-06-2017 |
| | | | US | 2017336558 A1 | 23-11-2017 |
| | | | WO | 2016047675 A1 | 31-03-2016 |
| EP 4209811 | A1 | 12-07-2023 | AU | 2023200004 A1 | 20-07-2023 |
| | | | EP | 4209811 A1 | 12-07-2023 |
| | | | US | 2023213698 A1 | 06-07-2023 |

EPO FORM P0459

For more details about this annex : see Official Journal of the European Patent Office, No. 12/82

**EP 4 394 462 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202211077232
- CN 106772788 A
- US 20170003445 A1
- US 20130071080 A1